# EUROPÄISCHE PATENTSCHRIFT

(11) **EP 0 496 467 B1**
(45) Veröffentlichungstag und Bekanntmachung des Hinweises auf die Patenterteilung: **19.09.2001**
(21) Anmeldenummer: 92200135.9
(22) Anmeldetag: 17.01.1992
(51) Int. Cl.: H04L 1/20, H04B 7/005

(54) **Durch die gemessene Empfangsgüte gesteuerter Empfänger mit verringertem Stromverbrauch für ein digitales Übertragungssystem**
Receiver for digital transmission system controlled by the measured quality factor of the signal and with improved power consumption
Récepteur pour système de transmission numérique commandé par le facteur de qualité du signal mesuré avec consommation de courant diminuée

(30) Priorität: 25.01.1991 DE 4102151
(43) Veröffentlichungstag der Anmeldung: 29.07.1992
(73) Patentinhaber: Philips Corporate Intellectual Property GmbH, 52064 Aachen (DE); Koninklijke Philips Electronics N.V., 5621 BA Eindhoven (NL)
(72) Erfinder: Baier, Alfred, Dr.-Ing., CH-8501 Eckental (CH)
(74) Vertreter: Volmer, Georg, Dipl.-Ing.

(56) Entgegenhaltungen:
- EP-A- 0 415 897
- PROCEEDINGS IEE COLLOQUIUM ON METHODS OF COMBATING MULTIPATH EFFECTS IN WIDEBAND CELLULAR RADIO SYSTEMS 29 October 1987, London (UK)
- IEEE TRANSACTIONS ON COMMUNICATIONS, Bd.38, Nr.12, Dezember 1990, NEW YORK US Seiten 2106 - 2113, XP203341 K.PAHLAVAN & J.MATTHEWS 'PERFORMANCE OF ADAPTIVE MATCHED FILTER RECEIVERS OVER FADING MULTIPATH CHANNELS'

## Beschreibung

Die Erfindung betrifft einen Empfänger für ein digitales-Übertragungssystem mit einer Empfangseinrichtung zum Empfang eines Empfangssignals und mit einer Signalverarbeitungseinrichtung zur Rückgewinnung einer gesendeten Datenfolge aus dem Empfangssignal.

Derartige Empfänger werden beispielsweise im künftigen paneuropäischen Mobilfunksystem GSM (Group Special Mobil), welches in Deutschland als D-Netz bezeichnet wird, eingesetzt. Bei diesem Mobilfunksystem werden beispielsweise Sprachsignale in digitalisierter Form zusammen mit anderen digitalen Signalen in einem Zeit-Vielfach-ZugrViffs-Verfahren (TDMA = Time Devision Multiple Access) übertragen. Von einem Sender des Mobilfunksystems werden die Daten mittels einer geeigneten Modulation ausgesandt. Durch Reflektionen und Mehrwegeausbreitung auf dem Übertragungsweg erreicht das ausgesendete Signal den Empfänger in mehreren überlagerten Signalanteilen mit unterschiedlichen Laufzeiten und Phasenverschiebungen, wodurch das Signal verzerrt wird. Diese Verzerrungen bewirken, daß die im empfangenen Signal enthaltenen Binärzeichen durch vorangehende Binärzeichen beeinflußt werden (Nachbarzeichenstörungen). Zur Entzerrung der ursprünglich gesendeten Datensymbole ist eine Signalverarbeitungseinrichtung erforderlich, die einen Entzerrer aufweist, der diese Verzerrungen rückgängig macht.

Aus JP 2-199936 A ist eine digitale Sende-/Empfangseinrichtung bekannt, bei der zur Verbesserung der Übertragungseffizienz im Empfänger eine Einrichtung zur Ermittlung der Übertragungsqualität vorgesehen ist. Diese liefert bei einer guten Übertragungsqualität ein Schaltsignal an eine empfangs- und sendeseitig angeordnete Fehlerkorrektureinrichtung, wodurch die Fehlerkorrektureinrichtung abgeschaltet wird.

Weiterhin ist aus dem unter Artikel 54(3) EPÜ fallenden Dokument EP 0 415 897 ein Verfahren zur Verringerung des Leistungsverbrauchs in einem Mobilfunkempfänger bekannt. In einer Empfangseinrichtung eines Mobilfunkgerätes werden die ankommenden Basisbandsignale demoduliert und entzerrt, um die vom Funkkanal zwischen Basisstation und Mobilfunkgerät verursachten Störungen (Mehrwegeausbreitung) zu kompensieren. Da bei besonders günstigen Bedingungen ( beispielsweise bei Einwegeausbreitung) keine Entzerrung der demodulierten Signale notwendig ist, wird die zeitliche Dispersion der empfangenen Signale vor der Demodulation geschätzt. Wenn die Dispersion höher als ein vorgegebener Wert ist, wird eine Demodulation mit Entzerrung durchgeführt, während bei einer Dispersion kleiner als der vorgegebene Wert eine Demodulation ohne Entzerrung durchgeführt wird. Die Dispersion wird dabei mittels Messung und Bewertung der Energie der Impulsantwort geschätzt.

Der Erfindung liegt die Aufgabe zugrunde, einen Empfänger der eingangs genannten Art anzugeben, der einen geringen Signalverarbeitungsaufwand sowie einen geringen Stromverbrauch aufweist.

Diese Aufgabe wird bei einem Empfänger der eingangs genannten Art dadurch gelöst, dass an den Ausgang der Empfangseinrichtung eine Signalanalyseeinrichtung angeschlossen ist, die vorgesehen ist, ein Maß für die Empfangsgüte des Empfangssignals zu ermitteln und zur Verringerung der Stromaufnahme des Empfängers den Verarbeitungsaufwand der Signalverarbeitungseinrichtung in Abhängigkeit der ermittelten Empfangsgüte zu steuern und dass in der Signalverarbeitungseinrichtung ein Signalverarbeitungsalgorithmus implementiert ist, dessen Komplexität und Leistungsfähigkeit durch mindestens einen durch die Signalanalyseeinrichtung einstellbaren Parameter bestimmbar ist.

Die Erfindung geht dabei von der Erkenntnis aus, dass der erforderliche Signalverarbeitungsaufwand in Empfängern für digitale Datensignale auf zeitvarianten, dispersiven Funkkanälen von der Empfangsgüte, d.h. insbesondere vom Grad der Dispersivität des Funkkanals abhängig ist. Mit anderen Worten, bei großer Dispersivität des Funkkanals ist ein höherer Signalverarbeitungsaufwand notwendig als bei geringerer Dispersivität. Als Grad der Dispersivität des Funkkanals dient dabei beispielsweise die Länge der momentanen Kanalimpulsantwort. Zur Reduzierung des Signalverarbeitungsaufwands und damit auch zur Minimierung des Stromverbrauchs wird durch die Signalanalyseeinrichtung beispielsweise in regelmäßigen Zeitintervallen die Empfangsgüte bestimmt und die Komplexität und damit die Leistungsfähigkeit der Signalverarbeitung im Empfänger ständig an den aktuellen Grad der Empfangsgüte angepasst. Dies ist besonders bei batteriebetriebenen Empfängern, beispielsweise sogenannten Handfunktelefonen (Handhelds) von großer Bedeutung. Die mit einer Batterieladung mögliche Betriebsdauer derartiger Handfunktelefone wird durch die Minimierung des Stromverbrauchs merklich verlängert, ohne dass die Empfangsqualität verringert ist.

Wird in der Signalanalyseeinrichtung die Dispersivität des jeweiligen Übertragungskanals bestimmt und der Signalverarbeitungsaufwand der Signalverarbeitungseinrichtung zur Rückgewinnung der gesendeten Datenfolge durch die Signalanalyseeinrichtung in Abhängigkeit der Dispersivität des jeweiligen Übertragungskanals gesteuert, so wird hierdurch der bisherige Nachteil vermieden, dass bei derartigen Empfängern der Signalverarbeitungsaufwand und damit auch die Stromaufnahme sich aus einem "ungünstigsten Betriebsfall" ergeben und diese somit gleichbleibend hoch sind, auch wenn aktuell ein erheblich günstigerer Betriebsfall d.h. eine erheblich geringere Dispersivität des Übertragungskanals, vorliegt. Bei einem Empfänger gemäß der Erfindung hingegen wird eine kanaladaptive Minimierung der Stromaufnahme des Empfängers erreicht. Bei einem Mobilfunkempfänger führt dies dazu, dass die Stromaufnahme des Empfängers bei Betrieb im Stadtgebiet, wo der Mobilfunkkanal eine weitaus geringere Dispersivität aufweist, geringer ist, als bei Betrieb des Empfängers in hügeligem Gelände mit einem stark dispersiven Mehrwegeempfang.

Ist in der Signalverarbeitungseinrichtung ein Signalverarbeitungsalgorithmus implementiert, dessen Komplexität und Leistungsfähigkeit durch mindestens einen durch die Signalanalyseeinrichtung einstellbaren Parameter bestimmt ist, so erlaubt die Variation des bzw. der Parameter eine einfache Adaption der Signalverarbeitungseinrichtung an die jeweiligen Betriebsverhältnisse (d.h. an die Empfangsgüte, insbesondere den Grad der Dispersivität).

Arbeiten die Signalanalyseeinrichtung und die Steuerung der Signalverarbeitungseinrichtung blockweise gemäß einer durch Rahmen und/oder Zeitschlitze vorgegebenen Blockstruktur des Empfangssignals, so dient dabei der durch das Empfangssignal vorgegebene Zeitrahmen auch der regelmäßigen Verarbeitung des Empfangssignals in der Signalanalyseeinrichtung, so dass eine zusätzliche zeitliche Steuerung dieser Verarbeitung nicht benötigt wird.

Bei einer Ausgestaltungsform weist die Signalverarbeitungseinrichtung einen Entzerrer mit Filterstruktur auf, wobei die Anzahl der Filterstufen entsprechend der Empfangsgüte des Empfangssignals einstellbar ist. Kommt beispielsweise ein linearer Entzerrer bzw. ein Entzerrer mit entscheidungsgekoppelter Rückführung (Decision-Feedback-Entzerrer) mit Transversal-Filter oder Lattice-Filter-Struktur zum Einsatz, so kann die Anzahl der Filterstufen im Vorwärts- und/oder Rückwärtszweig durch die Signalanalyseeinrichtung kanaladaptiv eingestellt werden.

Bei einer weiteren Ausgestaltungsform weist die Signalverarbeitungseinrichtung einen auf einem Zustandsmodell des Übertragungskanals basierenden Entzerrer auf, bei dem die Zustandsanzahl des Zustandsmodells und/oder die Anzahl der berücksichtigten Kanalkoeffizienten bei der Metrikberechnung und/oder die Anzahl berücksichtigter Datenpfade und/oder die Registerlänge zur Speicherung der Datenpfade durch die Signalverarbeitungseinrichtung einstellbar sind. Ist in der Signalverarbeitungseinrichtung beispielsweise ein optimaler oder suboptimaler Entzerrer nach dem Prinzip der Maximum-Likelihood-Sequenzschätzung oder der sequentiellen Dekodierung implementiert, so kann durch Variation der Parameter "Anzahl der Zustände, Anzahl der berücksichtigten Kanalkoeffizienten bei der Metrikberechnung, Anzahl der verfolgten Datenpfade und Länge der Register zur Speicherung der verfolgten Datenpfade" eine einfache kanaladaptive Steuerung der Signalverarbeitungseinrichtung erfolgen. Ein derartiger Empfänger ist beispielsweise in DE 39 11 999 A1 beschrieben.

Bei einer weiteren Ausgestaltungsform wird die Signalanalyseeinrichtung aus einer Schätzeinrichtung zur Schätzung der momentanen Impulsantwort des Übertragungskanals und einer Analyseeinrichtung zur Bestimmung der Empfangsgüte gebildet. Dazu ist der Eingang der Schätzeinrichtung mit dem Ausgang der Empfangseinrichtung und der Ausgang der Schätzeinrichtung mit dem Eingang der Analyseeinrichtung verbunden, welche den Grad der Dispersivität des Übertragungskanals bestimmt und die Signalverarbeitungseinrichtung entsprechend steuert.

Bei einer weiteren Ausgestaltungform ist zwischen der Schätzeinrichtung und der Analyseeinrichtung ein adaptives Filter und/oder eine Einrichtung zur Bestimmung der Autokorrelationsfunktion der geschätzten Kanalimpulsantwort eingeschaltet. Bei dem Filter handelt es sich beispielsweise um ein an die geschätzte Kanalimpulsantwort angepaßtes Matched-Filter oder Whitened-Matched-Filter, wie dies beispielsweise in dem Buch "Digital Communications" John G. Proakis, 1983 beschrieben ist. Enthält die Signalanalyseeinrichtung eine Einrichtung zur Bestimmung der Autokorrelationsfunktion der geschätzten Kanalimpulsantwort, so beruht der bei dem Empfänger verwendete Entzerrer beispielsweise auf dem Viterbi-Verfahren, wie dies beispielsweise in der europäischen Patentanmeldung EP 0 294 116 A2 beschrieben ist. Das Viterbi-Verfahren als solches ist beispielsweise im Aufsatz "The Viterbi Algorithm", G. David Forney J.R., Proceedings of the IEEE, Vol. 61, No. 3, March 1973, beschrieben.

Bei einer weiteren Ausgestaltungsform wird zur Bestimmung der Parameter der Signalverarbeitungseinrichtung von den Betragsquadraten der geschätzten Kanalimpulsantworten eines vorgebbaren zeitlichen Meßfensters, das größer ist als die maximal zu erwartende Länge der Kanalimpulsantwort, ein mittlerer Bereich des Meßfensters ermittelt, in dem die Betragsquadrate größer als eine vorgebbare Schwelle sind, wobei der mittlere Bereich des Meßfensters die Länge der die Parameter bestimmenden Kanalimpulsantwort kennzeichnet. Durch das Weglassen der unter der vorgebbaren Schwelle liegenden Werte wird somit die Länge der Impulsantwort als Maß für den Grad der Dispersivität des Funkkanals ermittelt und beispielsweise anhand einer zugeordneten Tabelle die Parameter der Signalverarbeitungseinrichtung und damit der Signalverarbeitungsaufwand bestimmt.

Bei einer Ausgestaltungform werden zur Bestimmung der Parameter der Signalverarbeitungseinrichtung alle Betragsquadrate der geschätzten Kanalimpulsantworten eines vorgebbaren Meßfensters, das größer ist als die maximal zu erwartende Länge der Kanalimpulsantwort, zu einer Gesamtenergie aufsummiert, wobei lediglich ein mittlerer Bereich ohne die Randbereiche des Meßfensters, deren Randenergieanteile der Gesamtenergie unter einem vorgebbaren Schwellwert liegen, die Länge der die Parameter bestimmenden Kanalimpulsantwort kennzeichnet. Durch das Aufsummieren der Betragsquadrate der geschätzten Kanalimpulsantworten wird die Gesamtenergie der Kanalimpulsantwort ermittelt. Von dieser Gesamtenergie wird zur Bestimmung der Parameter lediglich ein vorgebbarer mittlerer Bereich berücksichtigt, der eine bestimmte Mindestenergie aufweisen muß. Aus der so gewonnenen Länge der Kanalimpulsantwort und beispielsweise einer Tabelle können die den Signalverarbeitungsaufwand der Signalverarbeitungseinrichtung charakterisierenden Parameter bestimmt werden.

Im folgenden wird die Erfindung anhand der in den Figuren dargestellten Ausführungsbeispiele näher erläutert.

Es zeigen:
- Fig. 1: ein Blockschaltbild eines Empfängers für ein digitales übertragungssystem.
- Fig. 2: ein Blockschaltbild einer Signalanalyseeinrichtung.
- Fig. 3: ein weiteres Ausführungsbeispiel einer Signalanalyseeinrichtung.
- Fig. 4 und 5: jeweils ein Beispiel zur Auswertung von Ka nalimpulsantworten.

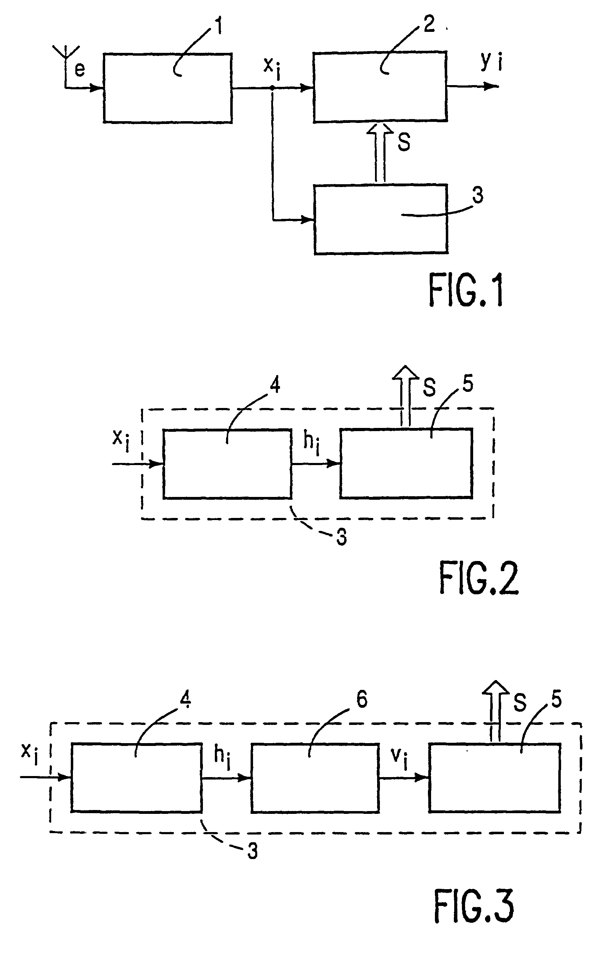

Bei dem in Fig. 1 dargestellten Blockschaltbild eines Empfängers wird ein Empfangssignal e einer Empfangseinrichtung 1 zugeführt, die beispielsweise aus einem HF-Empfangsteil, einem Sample- and Hold-Glied, einem Analog/-Digital-Umsetzer und einem Speicher besteht. Am Ausgang der Empfangseinrichtung 1 liegt ein Signal xᵢ, das einerseits einer Signalverarbeitungseinrichtung 2 und andererseits einer Signalanalyseeinrichtung 3 zugeführt wird. Die Signalanalyseeinrichtung 3 liefert ein Steuersignal S, welches die Signalverarbeitungseinrichtung 2 steuert. Am Ausgang der Signalverarbeitungseinrichtung 2 liegt ein Ausgangssignal yᵢ.

Bei dem in Fig. 1 dargestellten Empfänger handelt es sich beispielsweise um einen Mobilfunkempfänger für das GSM--System. Dabei unterliegt der stark zeitvariante Übertragungskanal und der damit verbundene Grad der Dispersivität unter Umständen sehr starken zeitlichen Schwankungen und ist abhängig von im voraus nicht bekannten Betriebsbedingungen oder Betriebsstandorten der Funksender und Empfänger. Der in Fig. 1 dargestellte Funkempfänger kann für derartige Betriebsfälle nach dem ungünstigsten hinsichtlich der Dispersivität zu erwartenden Betriebsfall bzw. gemäß einer vorgegebenen Spezifikation eines ungünstigsten Betriebsfalles ausgelegt werden. Entsprechend ist die Signalverarbeitungseinrichtung 2 mit einem Entzerrer ausgestattet, wie dies beispielsweise in DE-A 39 11 999 für ein digitales übertragungssystem beschrieben ist. Der hierbei beschriebene Entzerrer arbeitet unter allen Betriebsbedingungen immer mit derselben Komplexitiät und Leistungsfähigkeit. Im Gegensatz hierzu weist die in Fig. 1 dargestellte Signalverarbeitungseinrichtung 2 beispielsweise einen Entzerrer auf, dessen Komplexität und Leistungsfähigkeit durch einen oder mehrere Parameter bestimmt sind. Dazu wird mit Hilfe der Signalanalyseeinrichtung 3 das Signal xᵢ ausgewertet und ein Maß für die Empfangsgüte des Empfangssignals ermittelt, d.h. es wird der Grad der Dispersivität des Funkkanals bzw. der Grad der Verzerrung oder Nachbarzeichenstörung im Empfangssignal bestimmt. Entsprechend der ermittelten Empfangsgüte des Empfangssignals wird mit Hilfe des Steuersignals S der in der Signalverarbeitungseinrichtung 2 vorgesehene Entzerrer und dessen Parameter angesteuert. Hiermit wird ermöglicht, daß ein Mobilfunkempfänger, der für den ungünstigsten Betriebsfall eines stark dispersiven Mehrwegefunkkanals im hügelichen Gelände ausgelegt ist, im Stadtgebiet bei geringer Dispersivität des Funkkanals mit einer geringeren Leistungsfähigkeit der Signalanalyseeinrichtung 3 betrieben werden kann, ohne daß es zu einer Einbuße der Übertragungsqualität kommt. Insbesondere bei batteriebetriebenen Empfangsgeräten, beispielsweise bei Mobilfunktelefonen und/oder bei Handfunktelefonen (Hand-Helds) wird hierdurch eine Minimierung der Stromaufnahme erreicht. Damit wird die Betriebsdauer derartiger Geräte und somit auch deren Verfügbarkeit erhöht.

Fig. 2 zeigt ein Blockschaltbild einer Signalanalyseeinrichtung 3, wie sie beispielsweise in einem in Fig. 1 dargestellten Übertragungssystem einsetzbar ist. Dabei wird die Signalanalyseeinrichtung 3 aus einer Schätzeinrichtung 4 zur Schätzung der momentanen Kanalimpulsantwort und einer nachgeschalteten Analyseeinrichtung 5 gebildet. Die Analyseeinrichtung 5 bildet aus einem Signal hᵢ am Ausgang der Schätzeinrichtung 4 die Länge der Kanalimpulsantwort und bildet hieraus das Steuersignal S zur Steuerung der Signalverarbeitungseinrichtung 2 (Fig. 1).

Dabei gibt die Länge der momentanen geschätzten Impulsantwort den Grad der Dispersivität des Funkkanals an. Bei einer geringeren Länge der Kanalimpulsantwort kann der Signalverarbeitungsaufwand reduziert werden, während bei einer größeren Länge der Kanalimpulsantwort ein höherer Signalverarbeitungsaufwand benötigt wird, um eine ausreichende Empfangsqualität sicherzustellen. Dabei arbeitet die Schätzeinrichtung 4 sowie die Analyseeinrichtung 5 der Signalanalyseeinrichtung 3 sowie die Signalverarbeitungseinrichtung 2 blockweise gemäß einer durch Rahmen und/oder Zeitschlitze vorgegebenen Blockstruktur des Empfangssignals. Damit entfällt die Vorgabe einer zusätzlichen zeitlichen Steuerung dieser Verarbeitung. Mit Hilfe der Signalanalyseeinrichtung 3 wird somit ständig der Grad der Dispersivität des Funkkanals bestimmt und die Komplexität und die Leistungsfähigkeit der Signalverarbeitung im Empfänger auch ständig an den aktuellen Grad der Dispersivität angepaßt. Dies führt zu einer kanaladaptiven Minimierung des Signalverarbeitungsaufwands in der Signalverarbeitungseinrichtung 2 (Fig. 1) und somit auch zu einer Minimierung der Stromaufnahme des aus der Empfangseinrichtung 1, sowie aus der Signalverarbeitungseinrichtung gebildeten Empfängers.

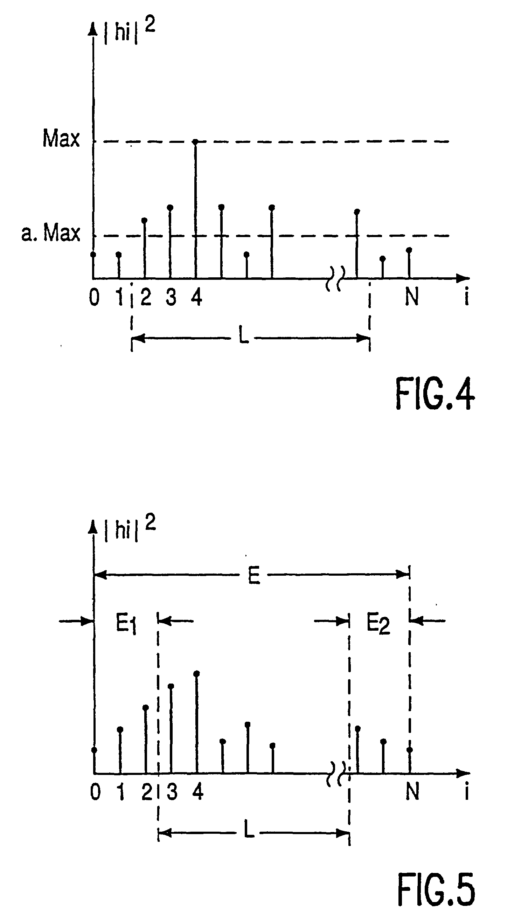

Fig. 3 zeigt das Blockschaltbild einer Signalanalyseeinrichtung 3, bei der zwischen einer Schätzeinrichtung 4 und einer Analyseeinrichtung 5 ein adaptives Filter 6 eingeschaltet ist. Mit Hilfe des adaptiven Filters 6 kann bei dem in Fig. 1 dargestellten Empfänger die Autokorrelationsfunktion der Kanalimpulsantwort bestimmt werden. Bei einer solchen Ausgestaltungsform kann somit zuerst die Autokorrelationsfunktion bestimmt werden, die schließlich den Signalverarbeitungsaufwand der Signalverarbeitungseinrichtung 2 bestimmt. Ein derartiger Empfänger beruht dann beispielsweise auf einem Verfahren, wie dies insbesondere in dem Aufsatz "Adaptive Maximum Likelihood receiver for carrier-modulated data transmission systems", G. Ungerboeck, IEEE, Transactions on communications, Vol. COM. - 22. Mai 1974, S 624-636, beschrieben ist.

Fig. 4 zeigt diskrete Werte von Betragsquadraten |hᵢ|² der geschätzten Kanalimpulsantworten zu diskreten Zeitpunkten i = 0, 1,.., N. Der Maximalwert von Betragsquadraten der geschätzten Kanalimpulsantwort wird durch die gestrichelt eingezeichnete Linie Max gekennzeichnet. Durch eine ebenfalls gestrichelt gezeichnete Linie a · Max, wobei a eine vorgebbare Konstante ist mit O<a<1, ist ein vorgebbarer Schwellwert gekennzeichnet. Aus den Werten aller Betragsquadrate kann die Länge L der Impulsantwort bestimmt werden.

Dazu werden in einem ersten Schritt zunächst aus dem Signal hᵢ, das von der in Fig. 2 dargestellten Schätzeinrichtung 4 geliefert wird, zunächst für diskrete Werte i = 0,.., N die Betragsquadrate |hᵢ|² bestimmt. Aus allen Werten dieser Betragsquadrate wird in einem zweiten Schritt das Maximum Max sowie die vorgebbare Schwelle a · Max bestimmt, wobei gilt: 0<a<1. In einem dritten Schritt werden von allen Werten der Betragsquadrate am rechten und linken Rand des von i = 0,..,N reichenden Meßfensters alle Werte vernachlässigt, die kleiner als der vorgebbare Schwellwert a · Max sind. Der "Rest", d.h. der übrigbleibende mittlere Bereich des Meßfensters, bestimmt die Länge L der Impulsantwort. Wie bereits im Zusammenhang mit den Fig. 1 bis 3 erläutert wurde, kann aus der so ermittelten Länge L der Kanalimpulsantwort der bzw. die Parameter für die Signalverarbeitungseinrichtung 2 (Fig. 1) gewonnen werden. Dies kann anhand einer in der Analyseeinrichtung 5 (Fig. 2 und Fig. 3) gespeicherten Tabelle erfolgen, die für verschiedene Werte der Länge L der Kanalimpulsantwort jeweils verschiedene Parameter in Form des Steuersignals S (Fig. 1 bis Fig. 3) liefert.

Bei dem in Fig. 5 dargestellten Beispiel zur Auswertung von Kanalimpulsantworten sind im wesentlichen die bereits im Zusammenhang mit Fig. 4 beschriebenen Bezeichnungen verwendet. Zur Bestimmung der Länge L der Kanalimpulsantwort wird bei dem in Fig. 5 dargestellten Beispiel zunächst entsprechend dem Beispiel in Fig. 4 die Betragsquadrate |hᵢ|² für i = 0,..,N bestimmt. Durch Aufsummieren der Betragsquadrate wird die Gesamtenergie E der Kanalimpulsantwort bestimmt. Von dem durch sämtliche Betragsquadrate |hᵢ|² bestimmten Meßfenster wird lediglich ein vorgebbarer mittlerer Bereich berücksichtigt, mit anderen Worten: es werden die in Fig. 5 mit E₁, E₂ gekennzeichneten Randenergieanteile nicht berücksichtigt. Die Randenergien betragen dabei beispielsweise jeweils 5% der Gesamtenergie E. Die Länge des sich nach dem Weglassen der Randbereiche mit den Randenergieanteile E₁, E₂ ergebenden mittleren Bereiches der Kanalimpulsantwort bestimmt die Länge L der Kanalimpulsantwort. Die Parameter zur Steuerung der Signalverarbeitungseinrichtung 2 (Fig. 1) werden entsprechend dem in Fig. 4 beschriebenen Beispiel, beispielsweise anhand einer Tabelle ermittelt.

## Patentansprüche

1. Empfänger (1, 2, 3) für ein digitales Übertragungssystem mit einer Empfangseinrichtung (1) zum Empfang eines Empfangssignals (e) und mit einer der Empfangseinrichtung (1) nachgeschalteten Signalverarbeitungseinrichtung (2) zur Rückgewinnung einer gesendeten Datenfolge aus dem Empfangssignal (e)
**dadurch gekennzeichnet**,
dass an den Ausgang der Empfangseinrichtung (1) eine Signalanalyseeinrichtung (3) angeschlossen ist, die vorgesehen ist, ein Maß für die Empfangsgüte des Empfangssignals (e) zu ermitteln und zur Verringerung der Stromaufnahme des Empfängers (1, 2, 3) den Verarbeitungsaufwand der Signalverarbeitungseinrichtung (2) in Abhängigkeit der ermittelten Empfangsgüte zu steuern,
und dass in der Signalverarbeitungseinrichtung (2) ein Signalverarbeitungsalgorithmus implementiert ist, dessen Komplexität und Leistungsfähigkeit durch mindestens einen durch die Signalanalyseeinrichtung (3) einstellbaren Parameter bestimmbar ist.

2. Empfänger nach Anspruch 1,
**dadurch gekennzeichnet,**
**dass** die Signalanalyseeinrichtung (3) und die Signalverarbeitungseinrichtung (2) blockweise gemäß einer durch Rahmen und/oder Zeitschlitze vorgegebenen Blockstruktur des Empfangssignals (e) arbeiten.

3. Empfänger nach Anspruch 1,
**dadurch gekennzeichnet,**
**daß** die Signalverarbeitungseinrichtung (2) einen Entzerrer mit Filterstruktur aufweist, wobei die Anzahl der Filterstufen entsprechend der Güte des Empfangssignals einstellbar ist.

4. Empfänger nach Anspruch 1,
**dadurch gekennzeichnet,**
**dass** die Signalverarbeitungseinrichtung (2) einen auf einem Zustandsmodell des Übertragungskanals basierenden Entzerrer aufweist, bei dem die Zustandsanzahl des Zustandsmodells und/oder die Anzahl der berücksichtigten Kanalkoeffizienten bei der Metrikberechung und/oder die Anzahl berücksichtigter Datenpfade und/oder die Registerlänge zur Speicherung der Datenpfade durch die Signalanalyseeinrichtung (3) einstellbar sind.

5. Empfänger nach Anspruch 1,
**dadurch gekennzeichnet,**
**dass** die Signalanalyseeinrichtung (3) aus einer Schätzeinrichtung (4) zur Schätzung der momentanen Impulsantwort des Übertragungskanals und einer Analyseeinrichtung (5) zur Steuerung der Signalverarbeitungseinrichtung (2) gebildet wird.

6. Empfänger nach Anspruch 5,
**dadurch gekennzeichnet,**
**dass** zwischen die Schätzeinrichtung (4) und die Analyseeinrichtung (5) ein adaptives Filter (6) und/oder eine Einrichtung (6) zur Bestimmung der Autokorrelationsfunktion der geschätzten Kanalimpulsantwort eingeschaltet ist.

7. Empfänger nach einem der Ansprüche 1, 5 bis 6,
**dadurch gekennzeichnet,**
**dass** zur Bestimmung der Parameter der Signalverarbeitungseinrichtung (2) von den Betragsquadraten (|hᵢ|²) der geschätzten Kanalimpulsantworten eines vorgebbaren zeitlichen Messfensters, das größer ist als die maximal zu erwartende Länge der Kanalimpulsantwort, ein mittlerer Bereich des Messfensters ermittelt wird, in dem die Betragsquadrate (|hᵢ|²) größer als eine vorgebbare Schwelle (a Max) sind, wobei der mittlere Bereich des Messfensters die Länge (L) der die Parameter bestimmenden Kanalimpulsantwort kennzeichnet.

8. Empfänger nach einem der Ansprüche 1, 5 bis 6,
**dadurch gekennzeichnet,**
**dass** zur Bestimmung der Parameter der Signalverarbeitungseinrichtung (2) alle Betragsquadrate (|hᵢ|²) der geschätzten Kanalimpulsantworten eines vorgebbaren Messfensters, das größer ist als die maximal zu erwartende Länge der Kanalimpulsantwort, zu einer Gesamtenergie (E) aufsummiert werden, wobei lediglich ein mittlerer Bereich ohne die Randbereiche des Messfensters, deren Randenergieanteile (E₁, E₂) der Gesamtenergie (E) unter einem vorgebbaren Schwellwert liegen, die Länge (L) der die Parameter bestimmenden Kanalimpulsantwort kennzeichnet.

## Claims

1. A receiver (1, 2, 3) for a digital transmission system comprising a receiver arrangement (1) for receiving a receive signal (e) and including after the receiver arrangement (1) a signal processing means (2) for recovering a transmitted data sequence from the received signal (e),
**characterized**
**in that** the output of the receiver arrangement (1) is connected to a signal analysis means (3) which determines a factor for the receive quality of the received signal (e) and forreducing the power consumption of the receiver (1, 2, 3) controls the processing circuitry of the signal processing means (2) in dependence on the established receive quality, and
in that the signal processing means (2) whose complexity and efficiency can be determined by at least one parameter that can be adjusted by the signal analysis means (3).

2. A receiver as claimed in Claim 1,
**characterized**
**in that** the signal analysis means (3) and the signal processing means (2) operate in blocks in accordance with a block structure of the received signal (e) predefined by frames and/or time slots.

3. A receiver as claimed in Claim 1,
**characterized**
**in that** the signal processing means (2) comprises an equalizer having a filter structure in which the number of filter stages may be adjusted in accordance with the quality of the received signal.

4. A receiver as claimed in Claim 1,
**characterized**
**in that** the signal processing means (2) comprises an equalizer based on a state model of the transmission channel, in which the number of states of the state model and/or the number of the channel coefficients to be taken into account for computing the metrics and/or the number of considered data paths to be taken into account and/or the length of the registers for storing the data paths can be adjusted by the signal analysis means (3).

5. A receiver as claimed in Claim 1,
**characterized**
**in that** the signal analysis means (3) comprises an estimator (4) for estimating the instantaneous impulse response of the transmission channel and an analyzer (5) for controlling the signal processing means (2).

6. A receiver as claimed in Claim 5,
**characterized**
**in that** an adaptive filter (6) and/or an arrangement (6) for determining the autocorrelation function of the estimated channel impulse response are inserted between the estimator (4) and the analyzer (5).

7. A receiver as claimed in one of the Claims 1, 5 to 6,
**characterized**
**in that** for determining the parameters of the signal processing means (2) on the basis of the squared values (|hᵢ|²) of the estimated channel impulse responses of a predeterminable time-dependent measuring window, which is longer than the maximum channel impulse response length that can be expected, a middle range of the measuring window is determined, in which the squared values (|hᵢ|²) exceed a predeterminable threshold (a.Max), while the middle range of the measuring window features the length (L) of the channel impulse response which determines the parameter.

8. A receiver as claimed in one of the Claims 1, 5 to 6,
**characterized**
**in that** for determining the parameters of the signal processing means (2), all the squared values (|hᵢ|²) of the estimated channel impulse responses of a predeterminable measuring window, which is longer than the maximum channel impulse response length that can be expected, are added together to form a total energy value (E), while only a middle range without the boundary ranges of the measuring window, whose boundary energy portions (E₁, E₂) of the total energy (E) lie below a predeterminable threshold, features the length (L) of the channel impulse response which determines the parameters.

## Revendications

1. Récepteur (1, 2, 3) pour un système de transmission numérique avec un dispositif de réception (1) en vue de la réception d'un signal de réception (e) et avec un dispositif de traitement de signal (2) monté en aval du dispositif de réception (1) en vue de la récupération d'une séquence de données transmise à partir du signal de réception (e),
**caractérisé en ce**
qu'à la sortie du dispositif de réception (1) est raccordé un dispositif d'analyse de signal (3) qui est prévu pour déterminer une mesure de la qualité de réception du signal de réception (e) et pour commander la mise en oeuvre de traitement du dispositif de traitement de signal (2) en fonction de la qualité de réception déterminée en vue de réduire la consommation électrique du récepteur (1,2,3)
et que, dans le dispositif de traitement de signal (2) est mis en oeuvre un algorithme de traitement de signal dont la complexité et la puissance peuvent être déterminées par au moins un paramètre réglable par le dispositif d'analyse de signal (3).

2. Récepteur selon la revendication 1,
**caractérisé en ce**
**que** le dispositif d'analyse de signal (3) et le dispositif de traitement de signal (2) fonctionnent par bloc conformément à une structure en blocs du signal de réception (e) préalablement déterminée par des cadres et/ou des fentes temporelles.

3. Récepteur selon la revendication 1,
**caractérisé en ce**
**que** le dispositif de traitement de signal (2) présente un redresseur avec une structure de filtrage, le nombre d'étages de filtrage étant réglable en fonction de la qualité du signal de réception.

4. Récepteur selon la revendication 1,
**caractérisé en ce**
**que** le dispositif de traitement de signal (2) présente un redresseur basé sur un modèle d'état du canal de transmission, le nombre d'états du modèle d'état et/ou le nombre des coefficients de canal pris en considération lors du calcul métrique et/ou le nombre de voies de données prises en considération et/ou la longueur du registre en vue de l'enregistrement des voies de données étant réglables par le dispositif d'analyse de signal (3).

5. Récepteur selon la revendication 1,
**caractérisé en ce**
**que** le dispositif d'analyse de signal (3) est formé d'un dispositif d'évaluation (4) en vue de l'évaluation de la réponse d'impulsion instantanée du canal de transmission et d'un dispositif d'analyse (5) en vue de la commande du dispositif de traitement de signal (2).

6. Récepteur selon la revendication 5,
**caractérisé en ce**
**qu'**entre le dispositif d'évaluation (4) et le dispositif d'analyse (5) est monté un filtre adaptatif (6) et/ou un dispositif (6) en vue de la détermination de la fonction d'autocorrélation de la réponse d'impulsion de canal évalué.

7. Récepteur selon l'une des revendications 1, 5 à 6,
**caractérisé en ce**
**qu'**en vue de la détermination des paramètres du dispositif de traitement de signal (2) par les carrés absolus (|h₁|²) des réponses d'impulsion de canal évaluées d'une fenêtre de mesure temporelle à déterminer préalablement qui est supérieure à la longueur maximale attendue de la réponse d'impulsion de canal, une zone centrale de la fenêtre de mesure dans laquelle les carrés numériques (|hᵢ|²) sont supérieurs à un seuil à déterminer préalablement (a . Max), la zone centrale de la fenêtre de mesure caractérisant la longueur (L) de la réponse d'impulsion de canal déterminant les paramètres.

8. Récepteur selon l'une des revendications 1, 5 à 6,
**caractérisé en ce**
**qu'**en vue de la détermination des paramètres du dispositif de traitement de signal (2), tous les carrés numériques (|hᵢ|²) des réponses d'impulsion de canal évaluées d'une fenêtre de mesure à déterminer préalablement qui est supérieure à la longueur maximale attendue de la réponse d'impulsion de canal sont additionnés en une énergie globale (E), seule une zone centrale sans les zones de bord de la fenêtre de mesure dont les composantes d'énergie des bords (E1, E2) de l'énergie globale (E) se situant sous une valeur seuil à déterminer préalablement caractérisant la longueur (L) de la réponse d'impulsion de canal déterminant les paramètres.
